# EUROPÄISCHE PATENTANMELDUNG

(11) **EP 2 387 868 A1**
(43) Veröffentlichungstag der Anmeldung: **23.11.2011**
(21) Anmeldenummer: 11164045.4
(22) Anmeldetag: 28.04.2011
(51) Int. Cl.: A01B 61/04

(54) **Blattfederelement für Bodenbearbeitungsmaschinen**

(30) Priorität: 18.05.2010 DE 102010017013
(71) Anmelder: Auf der Landwehr, Willi, 33397 Rietberg (DE)
(72) Erfinder: Auf der Landwehr, Willi, 33397 Rietberg (DE)
(74) Vertreter: TER MEER - STEINMEISTER & PARTNER GbR

(57) **Zusammenfassung**

Blattfederelement (14) zur Halterung eines Werkzeugs einer Bodenbearbeitungsmaschine, mit einem flachen Basisabschnitt (18) zur Befestigung des Blattfederelements an einem Rahmen der Bodenbearbeitungsmaschine, einem gebogenen Abschnitt (20), der sich knickfrei an den Basisabschnitt (18) anschließt, und einem geraden freien Schenkel (22), der sich knickfrei an den gebogenen Abschnitt (20) anschließt und Befestigungseinrichtungen (30, 32) für das Werkzeug (12; 48) aufweist, dadurch gekennzeichnet, dass das Blattfederelement (14) eine Breite von mindestens 120 mm und eine Dicke von 8 bis 12 mm aufweist, der gebogene Abschnitt (20) sich über einen Bogenwinkel von 120 - 160° erstreckt, und der freie Schenkel (22) eine Länge hat, die das Zwei- bis Dreifache der Breite des Blattfederelements beträgt.

## Beschreibung

Die Erfindung betrifft ein Blattfederelement zur Halterung eines Werkzeugs einer Bodenbearbeitungsmaschine, mit einem flachen Basisabschnitt zur Befestigung des Blattfederelements an einem Rahmen der Bodenbearbeitungsmaschine, einem gebogenen Abschnitt, der sich knickfrei an dem Basisabschnitt anschließt, und einem geraden freien Schenkel, der sich knickfrei an den gebogenen Abschnitt anschließt und Befestigungseinrichtungen für das Werkzeug aufweist.

Solche Blattfederelemente dienen beispielsweise zur Halterung von Säscharen oder Säscharträgem an einer Drillmaschine oder zur Halterung von Scheiben an einer Scheibenegge. Durch die federnde Halterung der Werkzeuge soll eine vertikale Bodenanpassung und ein Ausweichen bei Hindernissen wie Steinen oder dergleichen ermöglicht werden.

Aus DE 101 37 624 B4 und DE 203 08 821 U1 sind spiralförmige Blattfederelemente bekannt, bei denen sich der gebogene Abschnitt über einen Bogenwinkel von deutlich mehr als 180°, beispielsweise nahezu 360° erstreckt. Diese Blattfederelemente haben eine verhältnismäßig geringe Breite bzw. eine entsprechend geringe Torsionssteifigkeit, so dass sie nicht nur bei Hindernissen auch seitlich ausweichen, sondern auch im normalen Betrieb leicht seitlich ausbrechen können. Nachteilig ist auch, dass es im Betrieb eicht zu Längsschwingungen des Werkzeugs kommen kann, also zu Schwingungen in Fahrtrichtung der Bodenbearbeitungsmaschine, wodurch eine gleichmäßige flächendeckende Bearbeitung des Bodens und eine gleichmäßige Tiefenführung erschwert werden sowie - bei Drillmaschinen - die Saatgutablage unregelmäßig erfolgt.

Aufgabe der Erfindung ist es, ein Blattfederelement zu schaffen, das eine gleichmäßigere Bodenbearbeitung und eine verbesserte Tiefenführung ermöglicht.

Diese Aufgabe wird erfindungsgemäß dadurch gelöst, dass das Blattfederelement eine Breite von mindestens 120 mm und eine Dicke von 8 bis 12 mm aufweist, der gebogene Abschnitt sich über einen Bogenwinkel von 120 bis 160° erstreckt, und der freie Schenkel eine Länge hat, die das Zwei- bis Dreifache der Breite des Blattfederelements beträgt.

Untersuchungen haben gezeigt, dass dieses Blattfederelement trotz des vergleichsweise kleinen Bogenwinkels des gebogenen Abschnitts bei den meisten Bodenbedingungen eine ausreichende Bodenanpassung und einen störungsfreien Betrieb auch bei Anwesenheit von Hindernissen wie Steinen oder dergleichen ermöglicht, jedoch aufgrund seiner hohen Verwindungssteifigkeit eine wesentlich gleichmäßigere Tiefenführung des Werkzeugs gewährleistet. Darüber hinaus werden Längsschwingungen des Werkzeugs weitgehend unterdrückt, so dass eine gleichmäßige Bodenbearbeitung und, bei Drillmaschinen, eine gleichmäßigere Platzierung des Saatgutes ermöglicht wird. Aufgrund der hohen Torsionssteifigkeit des Blattfederelements führt das Arbeitswerkzeug nur geringe laterale Ausweichbewegungen aus, wodurch bei Scheibeneggen die Gleichmäßigkeit der Bodenbearbeitung verbessert und bei Drillmaschinen eine gleichmäßigere Reihenbreite erreicht wird. Weitere Vorteile bestehen darin, dass die Blattfeder weniger Bauraum beansprucht und sich einfacher montieren lässt als herkömmliche Blattfedern.

Weitere Gegenstände der Erfindung sind eine Scheibenegge und eine Drillmaschine, die mit erfindungsgemäßen Blattfederelementen ausgerüstet sind.

Vorteilhafte Ausgestaltungen und Weiterbildungen der Erfindung ergeben sich aus den Unteransprüchen.

Im folgenden werden Ausführungsbeispiele anhand der Zeichnung näher erläutert.

Es zeigen:
- Fig. 1: eine Seitenansicht einer Scheibenegge mit erfindungsgemäßen Blattfederelementen;
- Fig. 2: eine Rückansicht eines einzelnen Blattfederelements der Scheibenegge mit einer daran gehaltenen Scheibe zur Bodenbearbeitung;
- Fig. 3: eine Seitenansicht eines Blattfederelements der Scheibenegge;
- Fig. 4: das Blattfederelement nach Fig. 3 in der Draufsicht;
- Fig. 5: eine Seitenansicht einer Drillmaschine mit erfindungsgemäßen Blattfederelementen; und
- Fig. 6: ein einzelnes Blattfederelement der Drillmaschine in einer Darstellung analog zu Fig. 4.

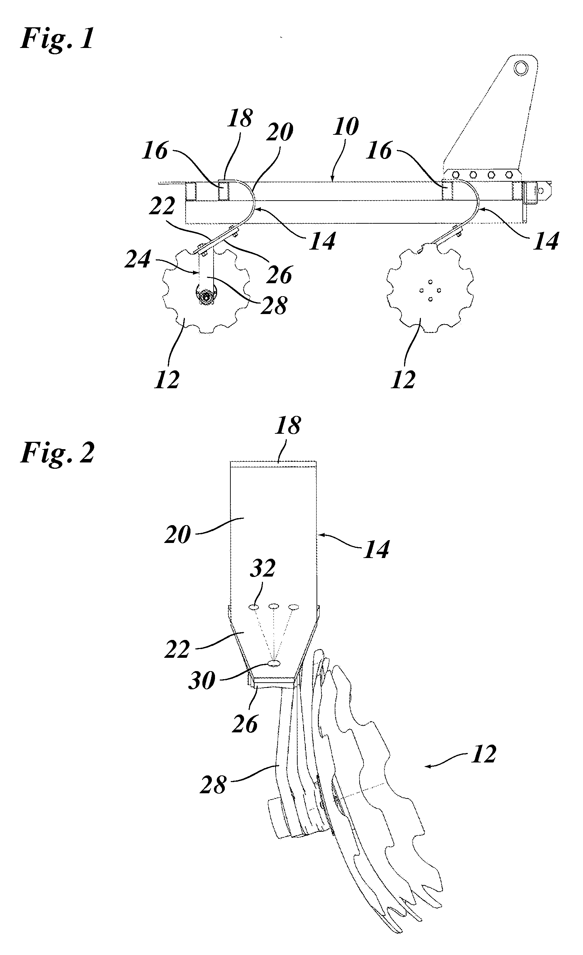

Fig. 1 zeigt in einer Seitenansicht eine Scheibenegge mit einem im Grundriss etwa rechteckigen Rahmen 10, der bekannter Weise anheb- und absenkbar an ein nicht gezeigtes Zugfahrzeug ankuppelbar ist und zwei Sätze von scheibenförmigen Werkzeugen 12 trägt. Die Werkzeuge 12 sind jeweils mit Hilfe eines Blattfederelements 14 elastisch an einer Traverse 16 des Rahmens 10 gehalten.

Jedes Blattfederelement 14 ist mit einem flachen Basisabschnitt 18 auf der Oberseite der zugehörigen Traverse 16 befestigt, beispielsweise angeschraubt. An den Basisabschnitt 18 schließ sich ohne Knick ein gebogener Abschnitt 20 an, der einen konstanten Krümmungsradius von 120 bis 160 mm, vorzugsweise 140 mm aufweist und sich über einen Bogenwinkel von 120 - 160°, vorzugsweise 150° erstreckt. Der gebogene Abschnitt 20 geht dann fließend in einen geraden freien Schenkel 22 über, der eine Länge von 300 bis 500 mm, vorzugsweise 400 mm hat. Aufgrund des Bogenwinkels des gekrümmten Abschnitts von 150° bildet der freie Schenkel 22 mit der Horizontalen einen Winkel von etwa 30°. An der Unterseite dieses freien Schenkels 22 ist mit Schrauben ein Werkzeugträger 24 befestigt. Eine Befestigungsplatte 26 des Werkzeugträgers liegt satt an der Unterseite des freien Schenkels 22 an. Von dieser Befestigungsplatte geht am unteren Ende ein etwa vertikal verlaufender Tragarm 28 aus, an dessen unterem Ende das scheibenförmige Werkzeug 12 drehbar gelagert ist.

An jeder der Traversen 16 sind mehrere Blattfederelemente 14 in gleichmäßigen Abständen befestigt, die jeweils ein Werkzeug 12 tragen. In der Ansicht in Fig. 1 ist je Traverse nur ein einziges Werkzeug 12 sichtbar, da die übrigen Werkzeuge dieses Satzes durch das erste Werkzeug verdeckt sind.

Die scheibenförmigen Werkzeuge 12 sind am äußeren Umfangsrand gezahnt und insgesamt leicht bombiert. Bei dem in Fahrtrichtung hinteren Werkzeugsatz (links in Fig. 1) sind die konkaven Seiten der Werkzeuge 12 dem Betrachter zugewandt, während bei dem vorderen Werkzeugsatz die konvexen Seiten dem Betrachter zugewandt sind.

Die Blattfederelemente 14 sind so gestaltet, dass sie eine hohe Verwindungssteifigkeit aufweisen. Das hat den Vorteil, dass die zugehörigen Werkzeuge 12 stabil in ihrer jeweiligen Spur bleiben. Die Elastizität der Blattfederelemente 14 erlaubt leichte Ausweichbewegungen der Werkzeuge vornehmlich in vertikaler Richtung, während die Positionen der Werkzeuge in Fahrtrichtung weitgehend stabil bleiben. Insbesondere wird durch die gezeigte Form der Blattfederelemente 14 erreicht, dass die Werkzeuge nicht zu Längsschwingungen in Fahrtrichtung der Scheibenegge angeregt werden.

Fig. 2 zeigt ein einzelnes Blattfederelement 14 und drei mögliche Einstellpositionen des zugehörigen Werkzeugs 12. Der freie Schenkel 22 des Blattfederelements ist zum freien Ende hin trapezförmig verjüngt und weist als Befestigungseinrichtung für das Werkzeug 12 ein Schraubenloch 30 in der Nähe des freien Endes sowie drei weitere Schraubenlöcher 32 auf, die näher zum gebogenen Abschnitt 20 hin gelegen sind und auf einem Kreisbogen um das Schraubenloch 30 herum angeordnet sind. Auf diese Weise ist es möglich, die Befestigungsplatte 26 in drei unterschiedlichen Positionen zu montieren, so dass sich drei unterschiedliche Anstellwinkel für das scheibenförmige Werkzeug 12 ergeben. Ein stärkerer Anstellwinkel ist sinnvoll für eine flache und flächendeckende Bodenbearbeitung. Ein geringerer Anstellwinkel verbessert den Bodenfluss bei tiefer Bearbeitung.

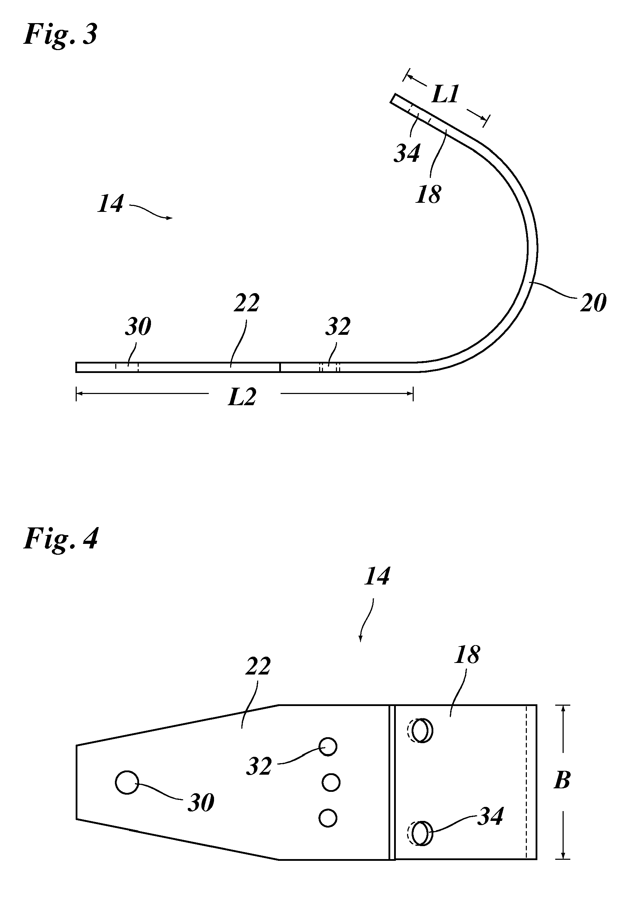

Die genaue Geometrie des Blattfederelements 14 ist in Fig. 3 und 4 dargestellt. Das Blattfederelement wird durch ein Stahlband mit einer Dicke von 8 bis 12 mm, vorzugsweise 10 mm gebildet und hat eine Breite B von mindestens 120 mm, vorzugsweise mindestens 140 mm. Im gezeigten Beispiel beträgt die Breite B 150 mm. Die Länge L1 des Basisabschnitts 18 beträgt 60 mm. Der gekrümmte Abschnitt 20 hat einen Krümmungsradius von 140 mm und erstreckt sich über einen Bogenwinkel von 150°. Der freie Schenkel 22 hat eine Länge L2 von 400 mm. Die Anordnung der Schraubenlöcher 30, 32 im freien Schenkel 22 ist in Fig. 4 zu erkennen. Im Basisabschnitt 18 sind zwei weitere Schraubenlöcher 34 vorgesehen, die zur Befestigung des Blattfederelements an der Traverse 16 dienen.

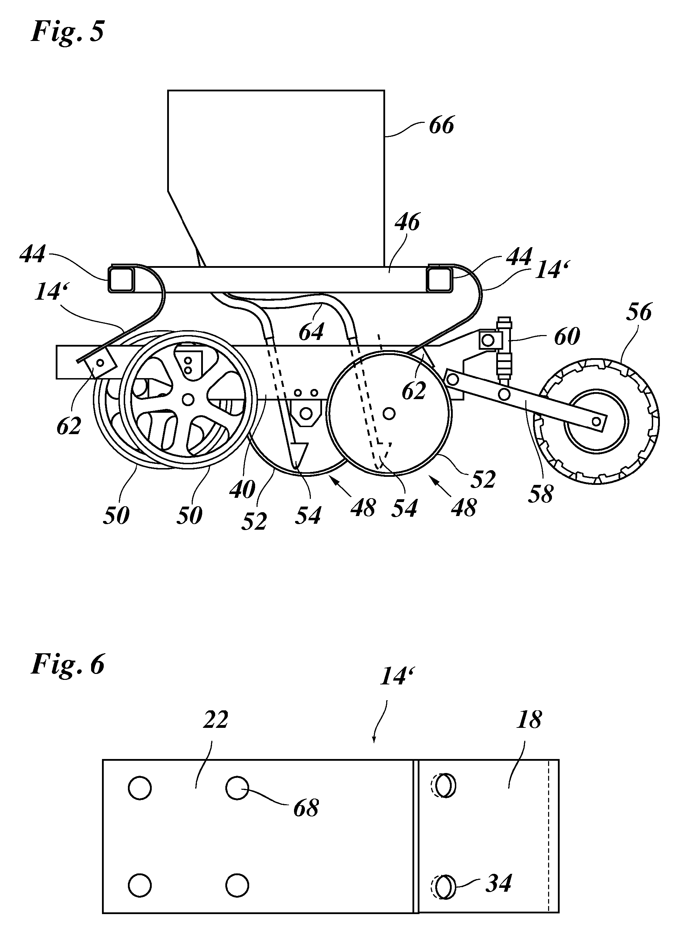

Fig. 5 zeigt eine Seitenansicht einer Drillmaschine für Getreide, wie sie - abgesehen von der Form der Blattfederelemente - auch aus DE 203 08 821 U1 bekannt ist.

Diese Drillmaschine weist mehrere parallele Werkzeugträger 40 auf, die jeweils mit einem vorderen und einem hinteren Blattfederelement 14' an Querstreben 44 eines Rahmens 46 gehalten sind. An diesem Werkzeugträger 40 sind als Werkzeuge 48 ein linkes und ein rechtes Einscheibenschar und eine linke und eine rechte Druckrolle 50 angebracht. Jedes Werkzeug 48 weist eine angewinkelt befestigte Scheibe 52 und ein spritzgewölbtes Schar 54 auf. Die Werkzeuge 48 und die jeweils nachfolgenden Druckrollen 50 sind auf beiden Seiten des Werkzeugträgers 40 versetzt angeordnet, so dass die Funktionstüchtigkeit auch bei bindigen Böden und Steinen gesichert ist.

Am vorderen Ende jedes Werkzeugträgers 40, in der Zeichnung rechts, ist ein Führungsrad 56 angeordnet. Es hat eine breite Auflagefläche und ist an Auslegern 58 schwenkbar an dem Werkzeugträger 40 gelagert. Zwischen den Auslegern und dem Werkzeugträger ist ein Abstandselement 60 angeordnet, durch das die Schwenkposition der Ausleger 58 fixiert wird. Da das höhenverstellbare Führungsrad 56 und die Druckrollen 50 im wesentlichen auf dem Boden abrollen, kann die Eindringtiefe der Werkzeuge 48 und damit die Ablagetiefe für das Saatgut eingestellt werden.

Die freien Enden der Blattfederelemente 14' sind durch Gelenkelemente 62 mit dem Werkzeugträger 40 verbunden. Auf diese Weise kann sich jeder einzelne Werkzeugträger unabhängig von den übrigen Werkzeugträgern an die jeweilige Bodenkontur anpassen. Durch die Gestaltung der Blattfederelemente 14' ist eine sichere Tiefenführung und ein ruhiger Lauf der Werkzeuge 48 gewährleistet. Auch auf wechselnden Böden (abwechselnd fest und weich) ist ein gleichmäßige Tiefenablage möglich, weil die Blattfederelemente 14' am vorderen und hinteren Ende des Werkzeugträgers 40 das gesamte Gewicht des Aufbaus auf den Werkzeugträger übertragen, der sich seinerseits über das Führungsrad und die Druckrollen auf dem Boden abstützt.

Die Schare 54 sind durch Schläuche 64 mit einem auf dem Rahmen 46 angeordneten Saatgutbehälter 66 verbunden.

Fig. 6 zeigt ein einzelnes Blattfederelement 14', das sich von dem in Fig. 4 gezeigten Blattfederelement 14 nur dadurch unterscheidet, dass sich der freie Schenkel 22 nicht trapezförmig verjüngt und am freien Ende anstelle der in Fig. 4 gezeigten Schraubenlöcher 30, 32 vier Schraubenlöcher 68 für die Gelenkelemente 62 aufweist.

## Patentansprüche

1. Blattfederelement (14, 14') zur Halterung eines Werkzeugs (12; 48) einer Bodenbearbeitungsmaschine, mit einem flachen Basisabschnitt (18) zur Befestigung des Blattfederelements an einem Rahmen (10; 46) der Bodenbearbeitungsmaschine, einem gebogenen Abschnitt (20), der sich knickfrei an den Basisabschnitt (18) anschließt, und einem geraden freien Schenkel (22), der sich knickfrei an den gebogenen Abschnitt (20) anschließt und Befestigungseinrichtungen (30, 32; 68) für das Werkzeug (12; 48) aufweist, **dadurch gekennzeichnet, dass** das Blattfederelement (14, 14') eine Breite von mindestens 120 mm und eine Dicke von 8 bis 12 mm aufweist, der gebogene Abschnitt (20) sich über einen Bogenwinkel von 120 - 160° erstreckt, und der freie Schenkel (22) eine Länge hat, die das Zwei- bis Dreifache der Breite des Blattfederelements beträgt.

2. Blattfederelement nach Anspruch 1, mit einer Breite von mindestens 140 mm.

3. Blattfederelement nach Anspruch 1 oder 2, bei dem der gekrümmte Abschnitt (20) einen im wesentlichen konstanten Krümmungsradius hat, der 80 bis 120% der Breite des Blattfederelements beträgt.

4. Blattfederelement nach einem der vorstehenden Ansprüche, bei dem der freie Schenkel (22) im Bereich seines freien Endes ein auf der Mittelachse angeordnetes erstes Schraubenloch (30) und, weiter zum gebogenen Abschnitt (20) hin gelegen, mehrere weitere Schraubenlöcher (32) aufweist, die auf einem Kreisbogen um das erste Schraubenloch (30) herum angeordnet sind.

5. Scheibenegge mit einem Rahmen (10) und mehreren scheibenförmigen Werkzeugen (12), die drehbar an jeweiligen Werkzeugträgern (24) gelagert sind, **dadurch gekennzeichnet, dass** jeder Werkzeugträger (24) durch ein Blattfederelement nach einem der Ansprüche 1 bis 4 mit dem Rahmen (16) verbunden ist.

6. Drillmaschine mit einem Rahmen (46) und mindestens einem Werkzeugträger (40), der mindestens ein Säschar als Werkzeug (48) trägt, **dadurch gekennzeichnet, dass** die vorderen und hinteren Enden des Werkzeugträgers (40) jeweils über ein Blattfederelement (14') nach einem der Ansprüche 1 bis 4 mit dem Rahmen (46) verbunden sind.

7. Drillmaschine nach Anspruch 6, bei der der Werkzeugträger (40) am vorderen und am hinteren Ende über je ein Gelenkelement (62), das eine waagerechte Gelenkachse hat, gelenkig mit dem freien Schenkel (22) eines der Blattfederelemente (14') verbunden ist.

8. Drillmaschine nach Anspruch 6 oder 7, bei der am Werkzeugträger (40) ein höhenverstellbares Führungsrad (56) sowie eine in der Spur des Werkzeugs (48) laufende Druckrolle (50) angeordnet sind.
